# EUROPEAN PATENT APPLICATION

(11) **EP 4 841 706 A1**
(43) Date of publication of application: **18.11.2026**
(21) Application number: 26165519.5
(22) Date of filing: 17.03.2026
(51) Int. Cl.: H01M 4/38, H01M 4/04, H01M 4/62, H01M 4/134, H01M 4/1395, H01M 10/0525, H01M 10/0562, H01M 4/02

(54) **ANODE**

(30) Priority: 16.05.2025 JP 2025082477
(71) Applicant: Toyota Jidosha Kabushiki Kaisha, Toyota-shi, Aichi-ken 471-8571 (JP)
(72) Inventor: KUDO, So, TOYOTA-SHI, AICHI-KEN, 471-8571 (JP); FURUYA, Ryosuke, TOYOTA-SHI, AICHI-KEN, 471-8571 (JP); YOKOI, Yuma, TOYOTA-SHI, AICHI-KEN, 471-8571 (JP); NAKAI, Takaaki, TOYOTA-SHI, AICHI-KEN, 471-8571 (JP)
(74) Representative: Cabinet Beau de Loménie

(57) **Abstract**

An anode including an anode layer (20) containing composite active material particles (60), and an anode current collector, in which the composite active material particles (60) contain an anode active material containing at least one of Si and Sn, a binder, and a conductive carbon material, and the composite active material particles contained in the anode layer (20) have a flatness A1, calculated from a predetermined expression, of 0.30 or more and less than 0.45.

## Description

### 1. Field of the Invention

The present disclosure relates to an anode.

### 2. Description of Related Art

Various technologies have been proposed regarding anodes, such as disclosed in Japanese Unexamined Patent Application Publication No. 2023-104840 (JP 2023-104840 A).

### SUMMARY OF THE INVENTION

In solid-state batteries, which are manufactured by pressing electrodes at high pressure, lengths of active material particles increase in planar direction of the electrodes after pressing, and the active material particles that were spherical before pressing become flattened after pressing, which can increase amount of expansion of the electrodes and reduce the Li ion conductivity of the electrode as compared to liquid batteries.

The present disclosure has been made in view of the above circumstances, and accordingly a main object thereof is to provide an anode in which the amount of expansion can be reduced.

That is to say, the present disclosure includes the following aspects.
<1> An anode including an anode layer containing composite active material particles, and an anode current collector, in which
   the composite active material particles contain an anode active material containing at least one element of elemental Si and elemental Sn, a binder, and a conductive carbon material,
   a flatness A1 of the composite active material particles contained in the anode layer is 0.30 or more and less than 0.45, as calculated by the following expression$flatness A 1 = 1 - L 1 / L 2$
   where L1 is a length of the composite active material particles in a thickness direction of the anode layer, and
   L2 is a length of the composite active material particles in a width direction of the anode layer.
<2> A production method of the anode according to <1>, including
   preparing the composite active material particles,
   preparing an anode layer slurry containing the composite active material particles, the binder, a conductive material, and a solvent,
   applying the anode layer slurry onto one face of the anode current collector,
   performing magnetic field orientation by applying a magnetic field to the anode layer slurry, in a perpendicular direction to a surface of the anode current collector, so as to orient the composite active material particles such that a longitudinal direction of the composite active material particles is oriented in the thickness direction,
   drying the anode layer slurry after the performing of the magnetic field orientation, so as to obtain the anode layer, and
   pressing the anode layer.
<3> A solid-state battery including the anode according to <1>.

According to the present disclosure, an anode that can reduce amount of expansion can be provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram illustrating an example of a conventional production method of an anode;
FIG. 2 is a schematic diagram illustrating an example of a production method of an anode according to the present disclosure;
FIG. 3 is a flowchart showing an example of the production method of the anode according to the present disclosure;
FIG. 4 is a cross-sectional schematic diagram illustrating an example of a solid-state battery according to the present disclosure; and
FIG. 5 is a table showing flatness A1 of the composite active material particles of each of Examples 1-1 to 1-3 and Comparative Examples 1-1 to 1-3, and confining pressure change of each battery.

### DETAILED DESCRIPTION OF EMBODIMENTS

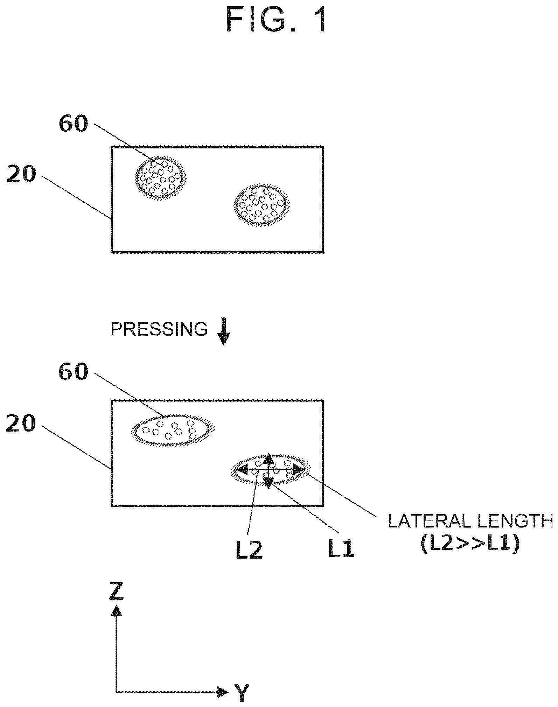

An embodiment according to the present disclosure will be described below. Note that dimensional relations (length, width, thickness, etc.) in the drawings do not reflect the actual dimensional relations. Y direction in FIGS. 1, 2, 4 is a planar direction or a width direction of an anode layer. Z direction in FIGS. 1, 2, 4 is a laminating direction or a thickness direction of the anode layer.

Elements described in a "singular form" may also include a plural form unless otherwise specified. For example, a particle may refer to a plurality of particles (particle group).

An example of a method for calculating average particle size in the present disclosure is as follows. First, in a transmission electron microscope (TEM) image or a scanning electron microscope (SEM) image that is taken at an appropriate magnifying power (e.g., 2,000× to 1,000,000×), the particle size of a given particle is calculated by handling the particle as a sphere. Such particle size calculations based on TEM observation or SEM observation are carried out for 200 to 300 particles of the same type, and the average of these particle sizes is taken as the average particle size.

### 1. Anode

In the present disclosure, there is provided an anode including an anode layer containing composite active material particles, and an anode current collector, in which
the composite active material particles contain an anode active material containing at least one element of elemental Si and elemental Sn, a binder, and a conductive carbon material,
a flatness A1 of the composite active material particles contained in the anode layer is 0.30 or more and less than 0.45, as calculated by the following expression$flatness A 1 = 1 - L 1 / L 2$
where L1 is a length of the composite active material particles in a thickness direction of the anode layer, and
L2 is a length of the composite active material particles in a width direction of the anode layer.

FIG. 1 is a schematic diagram illustrating an example of a conventional production method of an anode.

In the related art, pressing an anode layer 20 causes composite active material particles 60 to become laterally elongated and flat (length L2 of composite active material particles 60 in width direction Y of anode layer 20 is greater than length L1 of composite active material particles 60 in thickness direction Z of anode layer 20).

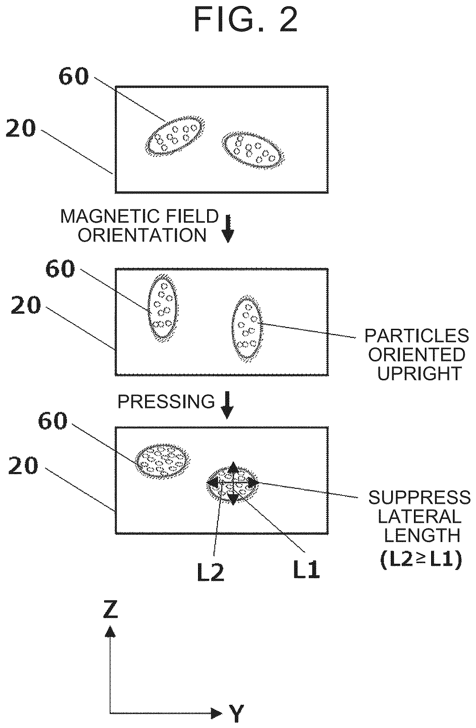

FIG. 2 is a schematic diagram illustrating an example of a production method of an anode according to the present disclosure.

In the present disclosure, after the anode layer 20 is applied to an anode current collector (omitted from illustration), a magnetic field is applied to the anode layer 20 to orient the composite active material particles 60 such that the composite active material particles 60 have a vertically elongated flat shape (length L2 of composite active material particles 60 in width direction Y of anode layer 20 is smaller than length L1 of composite active material particles 60 in thickness direction Z of anode layer 20). Pressing the anode layer 20 in this state enables the lateral flatness of the composite active material particles 60 to be suppressed as compared to conventional methods.

The anode of the present disclosure has an anode layer and an anode current collector.

The anode layer contains at least the composite active material particles, and may also contain a binder, a conductive material, an electrolyte, and so forth, as necessary.

The composite active material particles contain an anode active material containing at least one of elemental Si and elemental Sn, a binder, and a conductive carbon material.

The proportion of the composite active material particles in the anode layer may be, for example, 40% by mass or more and 100% by mass or less.

The average particle size of the composite active material particles may be, for example, 0.1 µm or more and 100 µm or less.

The anode active material may be, for example, in the form of particles. The average particle size of the particles of the anode active material may be, for example, 0.05 µm or more and 30 µm or less.

The anode active material may contain at least one of elemental Si and elemental Sn.

Examples of Si-based active materials containing elemental Si include Si, SiO, Si alloys, and so forth.

Examples of Sn-based active materials containing elemental Sn include Sn, Sn alloys, and so forth.

The anode layer may further contain another anode active material other than the Si-based active material and the Sn-based active material. Examples of other anode active materials include at least one selected from a group consisting of carbon-based active materials, Li-based active materials, and lithium titanate, or the like.

The carbon-based active material may include, for example, at least one selected from a group consisting of graphite, soft carbon, and hard carbon. "Graphite" is a general term for natural graphite and artificial graphite. The graphite may be a mixture of natural graphite and artificial graphite.

Examples of the Li-based active material include Li, Li silicate, Li alloys, and so forth.

The proportion of the anode active material in the composite active material particles may be, for example, 85% by mass or more and 99.4% by mass or less.

Examples of the binder include styrene-butadiene rubber (SBR), polyimide (PI), polyacrylic acid (PAA), acrylonitrile-butadiene rubber (NBR), butadiene rubber (BR), polyvinylidene fluoride (PVdF), polytetrafluoroethylene (PTFE), styrene-isoprene-styrene block copolymers (SISs), ethylene-propylene-diene copolymers (EPDMs), and so forth. The proportion of the binder in the composite active material particles may be, for example, 0.5% by mass or more and 15% by mass or less.

Examples of the conductive carbon materials include graphite, soft carbon, hard carbon, vapor grown carbon fibers (VGCF), carbon nanotubes (CNT), carbon nanofibers (CNF), and so forth. Conductive carbon materials can exhibit magnetic properties. The proportion of the conductive carbon material in the composite active material particles may be, for example, 0.1 mass % or more and 5 mass % or less.

The conductive material and the electrolyte used in the anode layer can be the same as those described below for the cathode layer.

The proportion of the conductive material in the anode layer may be, for example, 0.1 % by mass or more and 5% by mass or less.

The proportion of the electrolyte in the anode layer may be, for example, 0 mass % or more and 60 mass % or less.

The shape of the anode layer in plan view is not limited in particular, but may be, for example, a square shape or a rectangular shape.

The thickness of the anode layer is, for example, 0.1 µm or more and 1000 µm or less, and may be 1 µm or more and 500 µm or less, or may be 30 µm or more and 100 µm or less.

The composite active material particles contained in the anode layer have a flatness A1 of 0.30 or more and less than 0.45, as calculated by the following expression.$Flatness A 1 = 1 - L 1 / L 2$
L1: Length of a composite active material particle in thickness direction of the anode layer
L2: Length of the composite active material particle in width direction of the anode layer

The closer the flatness A1 is to 0, the closer a cross-sectional shape of the composite active material particles is to a circle, the closer the flatness is to 1, the greater the lateral flatness of the composite active material particles oriented in the width direction of the anode layer is, and when the flatness is below 0, the greater the upright flatness of the composite active material particles oriented in the thickness direction of the anode layer is.

The flatness A1 may be an average value of a plurality of the composite active material particles.

The length L1 of the composite active material particle in the thickness direction of the anode layer and the length L2 of the composite active material particle in the width direction of the anode layer are calculated by observing an SEM cross-sectional image of the anode layer.

The flatness A1 being 0.30 or greater and less than 0.45 means that with L2 as 100, it is sufficient for L1 to be greater than 55 and 70 or less. When the flatness A1 is 0.30 or more and less than 0.45, this means that the lateral flatness of the composite active material particles is smaller than when the flatness A1 is 0.45 or more, and means that although the shape of the composite active material particles is laterally flat, the lateral flatness of the composite active material particles is suppressed.

Examples of the anode current collector include stainless steel, aluminum, copper, nickel, iron, titanium, carbon, and so forth. Also, the thickness of the anode current collector may be, for example, in a range of 1 µm to 50 µm. The shape of the anode current collector as viewed in plan view is not limited in particular, and examples thereof include circular, elliptical, rectangular, any polygonal shape, and so forth. The anode current collector may have a configuration in which a buffer layer, an elastic layer, or a positive temperature coefficient (PTC) thermistor layer is disposed on the surface thereof.

### 2. Production Method of Anode

The present disclosure provides a production method of the anode according to the present disclosure, the production method including
preparing the composite active material particles,
preparing an anode layer slurry containing the composite active material particles, the binder, a conductive material, and a solvent,
applying the anode layer slurry onto one face of the anode current collector,
performing magnetic field orientation by applying a magnetic field to the anode layer slurry, in a perpendicular direction to a surface of the anode current collector, so as to orient the composite active material particles such that a longitudinal direction of the composite active material particles is oriented in the thickness direction,
drying the anode layer slurry after the performing of the magnetic field orientation, so as to obtain the anode layer, and
pressing the anode layer.

The production method of the anode according to the present disclosure includes (1) a composite active material particle preparation step, (2) an anode layer slurry preparation step, (3) a coating step, (4) a magnetic field orientation step, (5) a drying step, and (6) a pressing step.

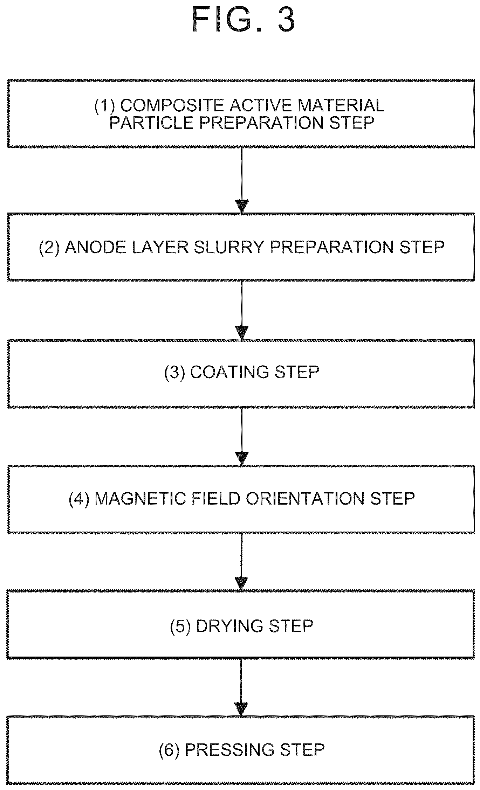

FIG. 3 is a flowchart showing an example of the production method of the anode according to the present disclosure.

As shown in FIG. 3 , the production method of the anode according to the present disclosure may carry out (1) the composite active material particle preparation step, (2) the anode layer slurry preparation step, (3) the coating step, (4) the magnetic field orientation step, (5) the drying step, and (6) the pressing step, in this order.

### (1) Composite Active Material Particle Preparation Step

The composite active material particles preparation step is a step of preparing the composite active material particles.

The composite active material particles can be prepared, for example, by a method of adding an anode active material and a conductive carbon material to a binder dispersion liquid in which a binder is dispersed in a solvent, and then compounding the resulting composite active material slurry by spray drying at a predetermined spray pressure and a predetermined liquid delivery rate.

Examples of the solvent include N-methylpyrrolidone (NMP), tetralin, diisobutyl ketone, butyl butyrate, mesitylene, heptane, dibutyl ether, decane, dodecane, isodecane, toluene, and so forth, and the solvent may contain two or more of these components.

Flatness A0 of the composite active material particles that are obtained, calculated from the following expression, can be changed by adjusting at least one of solid content concentration, spray pressure, and liquid delivery rate of the composite active material slurry in the spray drying.

Flatness A0 = 1 - transverse direction length a of composite active material particles / longitudinal direction length b of composite active material particles.

The transverse direction length a of the composite active material particles and the longitudinal direction length b of the composite active material particles are calculated by observing an SEM cross-sectional image of the composite active material particles.

The flatness A0 is a flatness of the composite active material particles in a state before the anode layer is formed or in a state before the anode layer is pressed, and is different from the flatness A1 of the composite active material particles contained in the anode layer after the anode layer has been pressed.

The shape of the composite active material particles prepared in the composite active material particle preparation step may be flat or spherical, but may be flat from the perspective of suppressing the lateral flatness of the composite active material particles contained in the anode layer after pressing the anode layer.

The flatness A0 of the composite active material particles prepared in the composite active material particle preparation step is not limited in particular, and may be, for example, 0.17 or more and 0.70 or less.

### (2) Anode Layer Slurry Preparation Step

The anode layer slurry preparation step is a step of preparing an anode layer slurry containing the composite active material particles, the binder, a conductive material, and a solvent.

Examples of the binder include the same ones as those described regarding the anode layer.

Examples of the conductive material include the same ones as those described below regarding the cathode layer.

Examples of the solvent include the same ones as those described regarding the composite active material slurry.

### (3) Coating Step

The coating step is a step of coating one face of the anode current collector with the anode layer slurry.

The coating method is not limited in particular, and examples thereof include doctor blade coating, metal mask printing, electrostatic coating, dip coating, spray coating, roll coating, gravure coating, screen printing, and so forth.

### (4) Magnetic Field Orientation Step

The magnetic field orientation step is a step of applying a magnetic field to the anode layer slurry, in a perpendicular direction to the surface of the anode current collector, thereby orienting the composite active material particles such that the composite active material particles are oriented with the longitudinal direction thereof in the thickness direction.

The degree of orientation of the composite active material particles, i.e., an angle θ formed between a straight line in the longitudinal direction of the composite active material particles and the surface of the anode current collector, can be calculated using images from SEM, X-ray computed tomography (CT), or the like, of a cross-section of the anode.

In the present disclosure, 30 to 100 composite active material particles are individually extracted within the field of view of the cross-sectional image of the anode, ellipsoidal approximation is performed to extract the major axis and the minor axis of each particle, the anode current collector is defined as a horizontal plane, and the minor angle (acute angle) at the intersection between the major axis of each of the composite active material particles and the horizontal plane is measured, and this angle is defined as the inclination angle θ of the composite active material particles, thereby defining the degree of orientation of each of the composite active material particles.

The degree of orientation of the composite active material particles in the anode layer can be controlled by applying a predetermined magnetic field to the anode slurry for a predetermined amount of time after applying the anode slurry onto the anode current collector, and before drying the anode slurry to form the anode layer, during anode production.

The predetermined amount of time may be, for example, 1 second to 1 hour, or 5 minutes to 30 minutes.

The predetermined magnetic field may be, for example, 0.1 T to 5 T, or 1 T to 3 T.

It is sufficient for the degree of orientation of the composite active material particles to be such that the inclination angle θ is greater than 45° and 90° or smaller, and may be 60° or greater, may be 75° or greater, or may be 90°.

### (5) Drying Step

The drying step is a step of drying the anode layer slurry after the magnetic field orientation step to obtain the anode layer.

The method for drying the anode layer slurry is not limited in particular, and examples thereof include natural drying, reduced pressure drying, vacuum drying, and so forth.

### (6) Pressing Step

The pressing step is a step of pressing the anode layer.

In the pressing step, pressing may be performed regarding a state of the anode layer alone, pressing may be performed regarding a state of the anode, or pressing may be performed regarding a state of a battery having the anode, an electrolyte layer, and a cathode, in this order.

The method for pressing the anode layer is not limited in particular, and examples thereof include roller pressing, plate pressing, and so forth. Alternatively, the anode layer may be pressed by applying confining pressure in the thickness direction using a confining jig.

### 3. Solid-State Battery

A solid-state battery according to the present disclosure includes the anode according to the present disclosure. The solid-state battery according to the present disclosure typically includes a cathode, an electrolyte layer, and an anode.

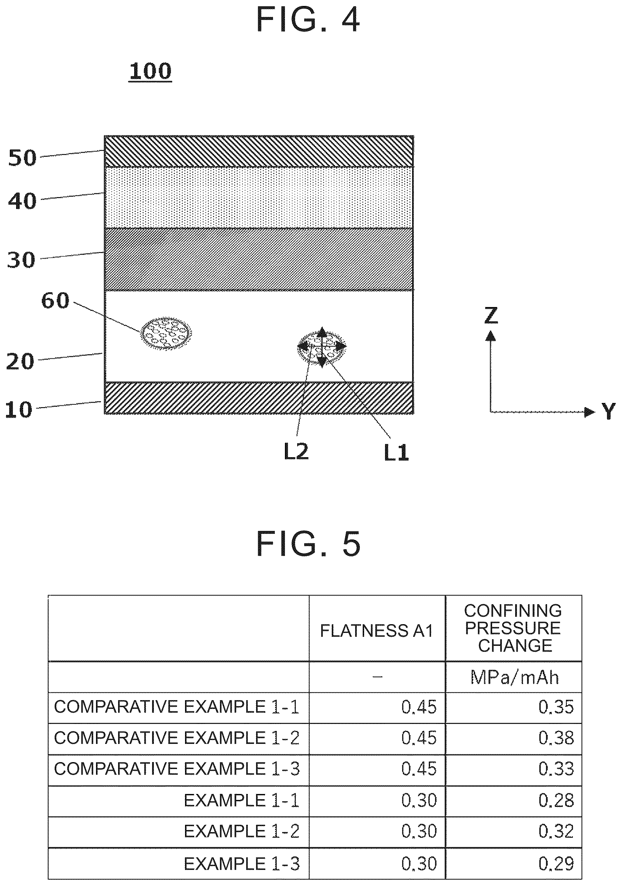

FIG. 4 is a sectional schematic view illustrating an example of the solid-state battery according to the present disclosure.

As illustrated in FIG. 4, a solid state battery 100 according to the present disclosure includes an anode current collector 10, the anode layer 20, an electrolyte layer 30, a cathode layer 40, and a cathode current collector 50, in this order. The anode layer 20 contains the composite active material particles 60 .

The anode is the anode according to the present disclosure described above.

The cathode has a cathode layer and a cathode current collector.

The cathode layer contains at least a cathode active material, and may contain at least one of an electrolyte, a conductive material, and a binder, as necessary.

The cathode layer may be disposed on one face of the cathode current collector, or may be disposed on both faces of the cathode current collector.

The shape of the cathode layer in plan view is not limited in particular, but may be, for example, a square shape or a rectangular shape.

Examples of the cathode active material include layered rock-salt active materials such as LiCoO₂, LiMnO₂, LiNiO₂, LiVO₂, Li(NiCoMn)O₂, Li(NiCoAl)O₂, and so forth, spinel active materials such as LiMn₂O₄, Li₄Ti₅O₁₂, Li(Ni_{0.5}Mn_{1.5})O₄, and so forth, and olivine active materials such as LiFePO₄, LiMnPO₄, LiNiPO₄, LiCoPO₄, and so forth, although not limited in particular thereto. Here, "(NiCoMn)" in "Li(NiCoMn)O₂" and "(NiCoAl)" in "Li(NiCoAl)O₂" indicate that the sum of the composition ratios in the parentheses is 1, and the composition ratios of the elements are optional as long as the sum is 1. Li(NiCoMn)O₂ may be, for example, Li(Ni_{1/3}Co_{1/3}Mn_{1/3})O₂, Li(Ni_{0.5}Co_{0.2}Mn_{0.3})O₂, LiNi_{0.8}Co_{0.15}Mn_{0.05}O₂, and so forth, and Li(NiCoAl)O₂ may be, for example, Li(Ni_{0.81}Co_{0.15}Al_{0.04})O₂, and so forth.

A coating layer containing a Li-ion conductive compound may be formed on the surface of the cathode active material. This is because the reaction between the cathode active material and solid electrolytes (in particular, sulfide solid electrolytes) can be suppressed. Examples of the Li-ion conductive compound include B₂O₃, Li₂B₄O₇, LiBPO₄, Li₃PO₄, LiPO₃, LiNbO₃, and so forth. The thickness of the coating layer is, for example, 1 nm or more and 30 nm or less. The coverage of the Li-ion conductive compound that covers the cathode active material is, for example, 70% or more, may be 90% or more, or may be 100%. The method for applying the Li ion conductive compound is not limited in particular, and any conventionally known method can be appropriately employed.

The cathode active material is generally in the form of particles. The cathode active material may be primary particles, or secondary particles that are an agglomerate of the primary particles.

The average particle size of the cathode active material is not limited in particular, and may be, for example, 0.01 µm or more and 50 µm or less, or may be 0.5 µm or more and 30 µm or less.

The proportion of the cathode active material in the cathode layer is, for example, 20 mass% or more, may be 30 mass% or more, or may be 40 mass% or more. On the other hand, the proportion of the cathode active material in the cathode layer is, for example, 95% by mass or less, may be 70% by mass or less, or may be 60% by mass or less.

Examples of electrolytes include solid electrolytes. The solid electrolytes may be an inorganic solid electrolyte such as a sulfide solid electrolyte, a halide solid electrolyte, an oxide solid electrolyte, a complex hydride solid electrolyte, or the like, or may be an organic solid electrolyte such as a gel electrolyte or the like.

The solid electrolyte may be in the form of particles from the perspective of ease of handling.

Also, the average particle size of the solid electrolyte particles is not limited in particular, and may be 1 nm to 100 µm.

The proportion of the solid electrolyte in the cathode layer may be, for example, 1% by mass or more and 60% by mass or less.

The cathode layer may contain a conductive material. Adding the conductive material improves electronic conductivity of the cathode layer. Examples of conductive materials include carbon-based conductive materials, metal particles, and conductive polymers. Examples of carbon-based conductive materials include particulate materials such as acetylene black (AB), Ketjen black (KB), and so forth, and fibrous materials such as vapor-grown carbon fibers (VGCFs), carbon nanotubes (CNTs), carbon nanofibers (CNFs), and so forth.

The proportion of the conductive material in the cathode layer may be, for example, 0.1% by mass or more and 5% by mass or less.

The cathode layer may contain a binder. Examples of the binder include the same binders as those described regarding the anode layer.

The proportion of the binder in the cathode layer may be, for example, 0.5 mass % or more and 15% by mass or less.

The thickness of the cathode layer is, for example, 0.1 µm or more and 1000 µm or less, may be 1 µm or more and 500 µm or less, or may be 30 µm or more and 100 µm or less.

The production method of the cathode layer is not limited in particular, and examples thereof include a method in which a cathode active material, a conductive material, and a solvent are mixed to obtain a cathode slurry, and the cathode slurry is applied to a cathode current collector and dried to form a cathode layer. When forming the cathode layer, press processing may be performed for pressing the cathode layer in the thickness direction. The press processing is the same as that described in "2. Production Method of Anode" above.

The solvent is the same as that described in "2. Production Method of Anode" above, for example.

Examples of materials for the cathode current collector include stainless steel, Cr, Au, Pt, Zn, aluminum, copper, nickel, iron, titanium, carbon, and so forth. The thickness of the cathode current collector is, for example, 0.1 µm or more and 100 µm or less. The shape of the cathode current collector in plan view is not limited in particular, and examples include circular, elliptical, rectangular, any polygonal shape, and so forth. The cathode current collector may have a configuration in which a buffer layer, an elastic layer, or a PTC thermistor layer is disposed on the surface thereof.

The electrolyte layer is a layer that is formed between the cathode layer and the anode layer, and contains at least an electrolyte. The electrolyte may be an electrolytic solution or a solid electrolyte.

The electrolyte layer may be a solid electrolyte layer made up of a solid.

When the electrolyte layer is a solid electrolyte layer, the solid electrolyte layer contains a solid electrolyte, and also includes a binder and so forth as necessary.

Examples of the solid electrolyte include the same ones as those described above regarding the cathode layer.

One solid electrolyte may be used alone, or two or more solid electrolytes may be used in combination. Also, when two or more solid electrolytes are used, the two or more solid electrolytes may be mixed, or a multilayer structure made up of two or more layers of the individual solid electrolytes may be formed.

The proportion of the solid electrolyte in the solid electrolyte layer is not limited in particular, but is, for example, 50% by mass or more, and may be within a range of 60% by mass or more and 100% by mass or less, may be within a range of 70% by mass or more and 100% by mass or less, or may be 100% by mass. The solid electrolyte layer may include an electrolytic solution of less than 1% by mass with respect to the total amount of the solid electrolyte layer.

Examples of the binder include the binders that can be contained in the cathode layer described above.

The content of the binder in the solid electrolyte layer may be 0% by mass to 10% by mass with respect to the total amount of the solid electrolyte layer.

The thickness of the electrolyte layer is, for example, 0.1 µm or more and 1000 µm or less, and may be 0.1 µm or more and 500 µm or less, or may be 0.1 µm or more and 100 µm or less.

The shape of the electrolyte layer in plan view is not limited in particular, and may be, for example, a square shape or a rectangular shape.

The solid-state battery in the present disclosure may be a lithium-ion battery. The solid-state battery may be a semi-solid-state battery or may be an all-solid-state battery. In the present disclosure, a semi-solid-state battery is a battery in which the electrolyte layer contains solid components such as an inorganic solid electrolyte or the like, and liquid components (e.g. a solvent and an electrolytic solution, etc.). In the present disclosure, the all-solid-state battery is a battery in which the electrolyte layer contains just solid components such as the inorganic solid electrolyte or the like as the electrolyte. Also, the solid-state battery in the present disclosure may be either a primary battery or a secondary battery, but may be a secondary battery in particular. This is because a secondary battery can be repeatedly charged and discharged and is useful as an in-vehicle battery, for example.

The solid-state battery in the present disclosure may be of a monopolar type or a bipolar type.

The solid state battery according to the present disclosure may further have a confining jig that applies a confining pressure to the cathode, the electrolyte layer, and the anode in the thickness direction. In particular, when the electrolyte layer is a solid electrolyte layer, the confining pressure may be applied to form ion conduction paths and electron conduction paths that are satisfactory. The confining pressure is, for example, 0.1 MPa or more, and may be 1 MPa or more, or may be 5 MPa or more. On the other hand, the confining pressure is, for example, 100 MPa or less, and may be 50 MPa or less, or may be 20 MPa or less.

The solid-state battery according to the present disclosure may include an outer encasement.

The outer encasement accommodates the cathode, the electrolyte layer, and the anode.

The material of the outer encasement is not limited in particular as long as it is stable with respect to the electrolyte, and examples thereof include metals such as Al, stainless steel, and so forth, and resins such as polypropylene, polyethylene, acrylic resin, and so forth.

The form of the outer encasement is not limited in particular, and examples include a coin type, a flat type, a cylindrical type, a laminate type, and so forth.

The shape of the outer encasement in plan view is not limited in particular, and may be, for example, square, rectangular, circular, or elliptical.

Examples of applications of the battery include power sources for vehicles such as hybrid electric vehicles (HEVs), plug-in hybrid electric vehicles (PHEVs), battery electric vehicles (BEVs), gasoline vehicles, diesel vehicles, and so forth. In particular, the battery may be used as a drive power source for hybrid electric vehicles (HEVs), plug-in hybrid electric vehicles (PHEV), and battery electric vehicles (BEVs). The battery may also be used as a power source for mobile bodies other than vehicles (e.g., trains, ships, and aircraft), or may be used as a power source for electric products such as information processing devices and so forth.

### Example 1

### Preparation of Composite Active Material Particles

Si particles serving as an anode active material and graphite serving as a conductive carbon material were added into a binder dispersion liquid in which a binder was dispersed in an organic solvent, and the composite active material slurry that was produced was composited by spray drying at a predetermined spray pressure and liquid delivery rate to prepare composite active material particles (composite active material particles preparation step).

### Production of Anode

A binder, a conductive material, a solid electrolyte (SE), and the composite active material particles prepared above were added into an organic solvent. Thereafter, the mixture was kneaded using an ultrasonic homogenizer to obtain an anode layer slurry (anode layer slurry preparation step).

The obtained anode layer slurry that was obtained was then applied to a Ni foil serving as an anode current collector (coating step).

A magnetic field of 1 T was applied to the anode layer slurry in the thickness direction of the anode current collector for 5 minutes (magnetic field orientation step).

The anode layer slurry was dried, thereby producing an anode having an anode layer on an anode current collector (drying step).

### Production of Cathode

A binder, a conductive material, an SE, and LiNi_{0.8}Co_{0.15}Mn_{0.05}O₂ serving as a cathode active material were added into the organic solvent. Thereafter, the mixture was kneaded using an ultrasonic homogenizer to obtain a cathode layer slurry. The cathode layer slurry that was obtained was then applied to an Al foil serving as a cathode current collector and dried, thereby producing a cathode having a cathode layer on a cathode current collector.

### Production of Solid Electrolyte Layer

A binder and an SE were added into an organic solvent. Thereafter, the mixture was kneaded using an ultrasonic homogenizer to obtain a solid electrolyte layer slurry. The solid electrolyte layer slurry that was obtained was then applied to an Al foil serving as a substrate and dried, thereby producing a solid electrolyte layer with Al foil attached thereto.

### Fabrication of Battery

The cathode layer of the cathode and the solid electrolyte layer of the solid electrolyte layer with Al foil attached were placed together and roll-pressed at 165 °C under a pressure of 50 kN/cm, and the Al foil was peeled off from the solid electrolyte layer with Al foil attached, thereby transferring the first solid electrolyte layer to the cathode layer. Also, the anode layer of the anode and the solid electrolyte layer, that is the solid electrolyte layer with Al foil attached, were placed together and roll-pressed at 25 °C under a pressure of 50 kN/cm, and the Al foil was peeled off from the solid electrolyte layer with Al foil attached, thereby transferring the second solid electrolyte layer to the anode layer. The anode onto which the second solid electrolyte layer was transferred was punched out using a punching machine having a diameter of 13.00 mm. The cathode onto which the first solid electrolyte layer was transferred was punched out using a punching machine having a diameter of 11.28 mm. A third solid electrolyte layer was further transferred onto the second solid electrolyte layer of the anode to which the second solid electrolyte layer was transferred, using a uniaxial press. A battery was formed by placing the third solid electrolyte layer of the anode onto which the solid electrolyte layer was transferred, and the first solid electrolyte layer of the cathode onto which the solid electrolyte layer was transferred, so as to face each other. Finally, current extraction tabs were attached to the cathode and the anode, and the cathode, the solid electrolyte layer, and the anode were sealed in an aluminum laminate using a vacuum lamination sealer, and confined at a pressure of 5 MPa, thereby fabricating a battery (pressing step).

### Comparative Example 1

A battery was obtained in the same manner as in Example 1, except that the magnetic field orientation step was not carried out in the above Production of Anode.

### Observation of Anode Layer

The battery that was fabricated was then disassembled, and a cross-section of the anode layer following ion milling was analyzed using an SEM. Acceleration voltage of the SEM was set to 2.0 kV and the magnification was set to 2000 times, and five arbitrarily selected locations were observed. From the obtained image, the lengths L1 of the composite active material particles in the thickness direction of the anode layer and the lengths L2 of the composite active material particles in the width direction of the anode layer were each measured within a field of view excluding observation images in which there was electrode fracturing, and the flatness A1 of the composite active material particles was calculated. The flatness A1 of the composite active material particles was 0.45 in Comparative Example 1 and was 0.30 in Example 1. Flatness A1 of 0.45 for the composite active material particles means L1 is 55 with L2 as 100. Flatness A1 of 0.30 for the composite active material particles means L1 is 70 with L2 as 100. Accordingly, although the composite active material particles of Example 1 have a laterally elongated flat shape in the laminated cross-section of the anode layer, it can be seen that the lateral flatness is suppressed (closer to a spherical shape) as compared to the composite active material particles of Comparative Example 1.

### Confining Pressure Change Measurement

Three batteries of Example 1 (Examples 1-1 to 1-3) were fabricated, and three batteries of Comparative Example 1 (Comparative Examples 1-1 to 1-3) were fabricated. The confining pressure of each battery fabricated was measured by a load cell, and a pressure change value from an uncharged state of the battery to 4.05 V was taken as the confining pressure change.

FIG. 5 is a table showing flatness A1 of the composite active material particles of each of Examples 1-1 to 1-3 and Comparative Examples 1-1 to 1-3, and confining pressure change of each battery.

It was confirmed that Example 1 was able to suppress change in confining pressure (i.e., amount of expansion of anode layer) more effectively than Comparative Example 1.

From the above, it was confirmed that due to the flatness A1 of the composite active material particles contained in the anode layer being 0.30 or more and less than 0.45, change in the confining pressure of the battery can be suppressed.

## Claims

1. An anode comprising: an anode layer (20) containing composite active material particles (60); and an anode current collector (10), wherein
the composite active material particles (60) contain an anode active material containing at least one element of elemental Si and elemental Sn, a binder, and a conductive carbon material,
a flatness A1 of the composite active material particles (60) contained in the anode layer (20) is 0.30 or more and less than 0.45, as calculated by the following expression$flatness A 1 = 1 - L 1 / L 2$
where L1 is a length of the composite active material particles in a thickness direction of the anode layer (20), and
L2 is a length of the composite active material particles (60) in a width direction of the anode layer (20).

2. A production method of the anode according to claim 1, comprising:
preparing the composite active material particles (60);
preparing an anode layer slurry containing the composite active material particles (60), the binder, a conductive material, and a solvent;
applying the anode layer slurry onto one face of the anode current collector (10);
performing magnetic field orientation by applying a magnetic field to the anode layer slurry, in a perpendicular direction to a surface of the anode current collector (10), so as to orient the composite active material particles (60) such that a longitudinal direction of the composite active material particles (60) is oriented in the thickness direction;
drying the anode layer slurry after the performing of the magnetic field orientation, so as to obtain the anode layer (20); and
pressing the anode layer (20).

3. A solid-state battery (100) comprising the anode according to claim 1.
